Europäisches Patentamt

European Patent Office

Office européen des brevets

(11) Publication number: **0 144 117**
**A1**

(12) # EUROPEAN PATENT APPLICATION

(21) Application number: **84304944.6**

(22) Date of filing: **19.07.84**

(51) Int. Cl.⁴: **F 16 K 31/30**
**E 03 D 1/32**

(30) Priority: **25.08.83 GB 8322853**

(43) Date of publication of application:
**12.06.85 Bulletin 85/24**

(84) Designated Contracting States:
**AT BE CH DE FR GB IT LI NL SE**

(71) Applicant: **CORDTECH LIMITED**
**Griffin Lane**
**Aylesbury Buckinghamshire HP19 3BP(GB)**

(72) Inventor: **Thompson, Maurice**
**Fawsley Snailwell Road**
**Newmarket Suffolk CB8 7DP(GB)**

(72) Inventor: **Burns, Lawrence**
**5 School Hill North Marston**
**Buckingham Buckinghamshire(GB)**

(74) Representative: **Feakins, Graham Allan et al,**
**Haseltine Lake & Co. Hazlitt House 28, Southampton**
**Buildings Chancery Lane**
**London WC2A 1AT(GB)**

(54) **Float-operated valves.**

(57) A float-operated valve including two valve members (5, 6) which may be in the form of discs and have adjoining polished faces (7) that are slidable relatively to one another, each of the members defining a passageway (5A, 6A) opening into a respective face (7), which passageways upon relative sliding of the two members, come into or out of alignment with one another thereby opening and closing the valve.

A float (16) is operatively coupled via a valve actuator (13) to the valve member (5) so that, in use, a variation in the height position of the float as dictated by the level of the liquid in which the float is situated causes the valve to open or close. The float movement need only be sufficient to rotate the valve member to which it is coupled by only 45° or 90°.

FIG. 2B.

FIG. 3.

## FLOAT-OPERATED VALVES

This invention relates to float-operated valves and in particular to the type used to admit water into a water storage or water closet flushing cistern.

Such valves are already well known but they have disadvantages in that they require different bore seats to be fitted for different water suppply pressures and also a long lever and relatively large volume float in order to obtain sufficient leverage to close against the supply pressure at a predetermined level.

In recent years there has been a need to reduce the size of the float, the lever length and the size of the valve itself to suit smaller size storage and water closet flushing cisterns. From this need has developed the use of servo-assisted float-operated valves. However, such valves are prone to failure because of the sophisticated nature of the design and when coping with supply waters which may be contaminated, especially with grit and flux.

According to the present invention, there is provided a float-operated valve including two valve members having adjoining polished faces that are slidable relatively to one another, each of the members defining a passageway opening into a respective said face, which passageways, upon relative sliding of the two members, become aligned with one another thereby opening the valve to allow passage of liquid past the valve members, the valve being closed by relative sliding of the two members to bring the passageways out of alignment with one another, and the valve further including a float operatively coupled to one of the two valve members whereby a variation, in use, in the height position of the float as dictated by the level of the liquid in which the float is situated causes said one valve member to slide relatively to the other valve member as aforesaid to open or close the valve.

Each valve member can be made of ceramic material and can have a smoothness that is RA 0.2 to 0.6 microns to give the required degree of polish on the adjoining polished faces. The adjoining polished faces should also be optically flat and have a high resistance to scouring. The flatness prevents lateral leaking of water, for example, between the two valve members.

For a better understanding of the invention and to show how the same may be carried into effect, reference will now be made, by way of example, to the accompanying drawings, in which:-

Figure 1 is a diagrammatic cross-sectional side view of one form of a float-operated valve according to the invention, the float itself not being shown,

Figure 2A is a diagrammatic view showing the float-operated valve fitted in a water cistern,

Figure 2B is an enlarged diagrammatic view of the valve taken at right angles to the view shown in Figure 2A,

Figure 3 is a sectional side view of a second form of float-operated valve,

Figure 3A shows the two valve members, separated from one another, of the valve shown in Figure 3,

Figure 4 is a view similar to Figure 3 and showing a third form of float-operated valve,

Figure 4A is a view similar to Figure 3A and showing the two valve members of the valve of Figure 4, and

Figure 5 is a diagrammatic sectional side view showing a fourth form of float-operated valve.

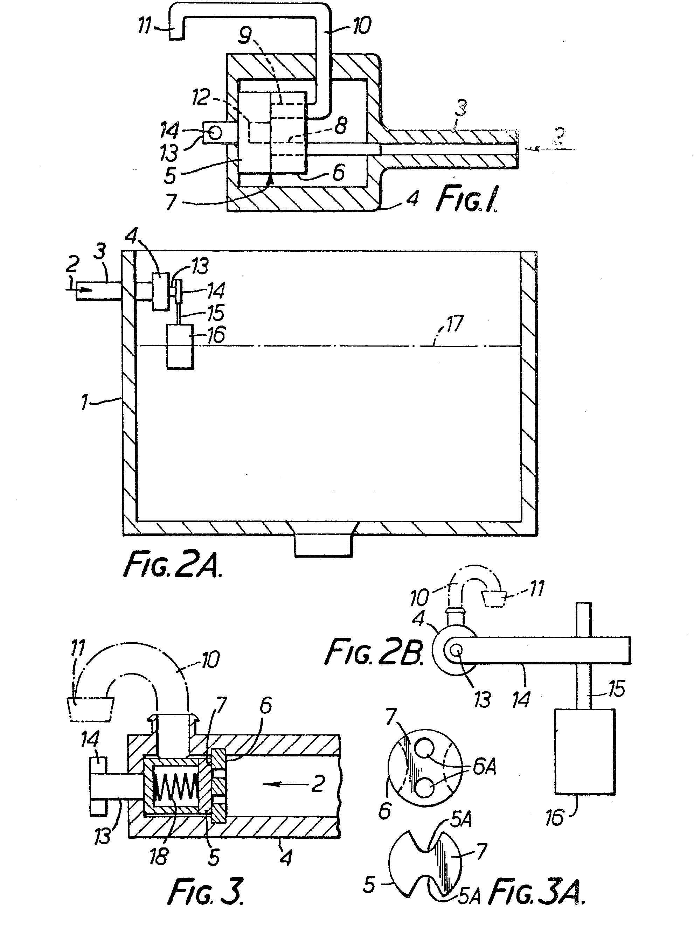

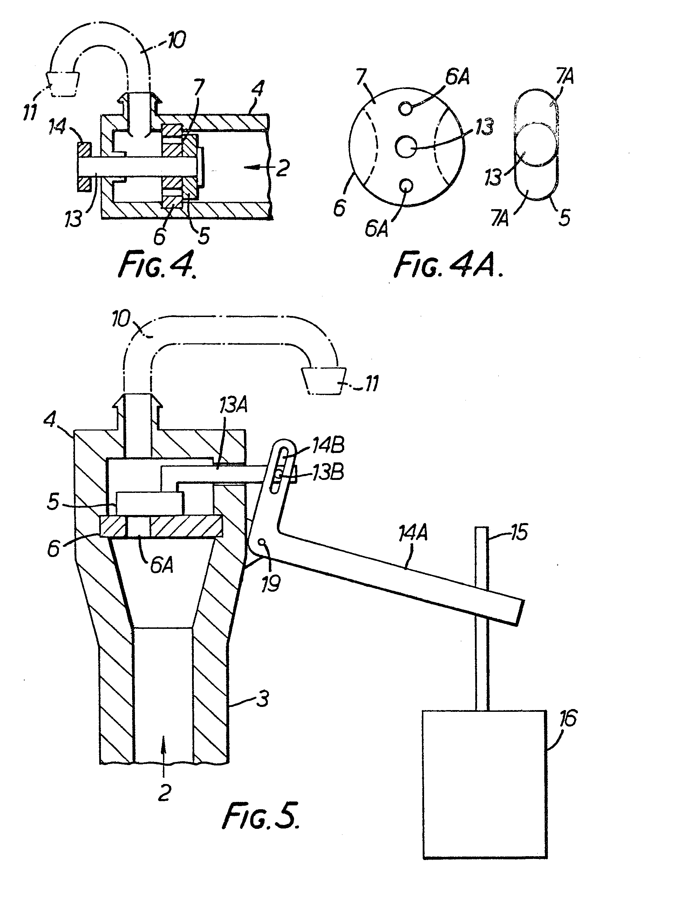

Referring to the drawings, each float-operated valve illustrated is arranged to be mounted in a water storage cistern 1 (Figure 2A) and is arranged to be connected to a water supply 2 and includes a valve tail 3 for connection to the supply arrangements. The valve tail 3 leads into a valve body 4. Inside the valve body 4 are two valve members 5 and 6 of which one is slidable relatively to the other. The two valve members 5, 6 have adjoining polished faces 7 which are arranged to be in permanent contact with one another and it is preferable that the polished areas of one or other or both the valve members 5, 6 can be restricted in area size by raised bosses as indicated by the dotted lines in Figures 3A and 4A.

In the forms shown in Figures 1, 3 and 4, the valve members 5 and 6 are in the form of discs, the valve member 5 being able to rotate relatively to the valve member 6.

Referring more particularly now to Figures 1, 2A and 2B, the fixed valve member 6 is provided with a water inlet passageway 8 and a water outlet passageway 9, the passageway 9 being connected to an outlet pipe 10 leading to a discharge spout 11 in the water cistern 1. The valve member 5 is provided with a passageway 12 so that, upon relative rotation of the valve member 5 with the valve member 6, the passageway 12 is brought into or out of alignment with the passageways 8 and 9, thereby to open or close the valve by respectively establishing and breaking the water flow line from the water supply 2 to the pipe 10.

The valve member 5 carries, on its side remote from its face 7, a central fixed stem 13 which protrudes through the wall of the valve body 4, the stem 13 acting as a valve actuator. A lever arm 14 is fixed at one end to the stem 13, the other end of the lever arm 14 being coupled to a rod 15 which is connected to the top of a float 16.

A variation, in use, in the height position of the float 16 as dictated by the level of the liquid in which the float is situated causes the valve member 5 to rotate so that its face 7 slides relatively to the face 7 of the valve member 6 to open or close the valve. Accordingly, when the valve is mounted in a water cistern such as that illustrated in Figure 2A, supposing that the cistern is empty or the water level is anywhere beneath the level 17 indicated, water from the supply 2 will pass through the valve and discharge from the spout 11. As the water level rises, the level reaches the float 16 and this float is then urged upwardly and exerts a force on the lever arm 14 which rises and causes a torque action on the valve member 5. As the valve member 5 rotates, the passageway 12 is brought out of alignment from both the inlet passageway 8 and the outlet passageway 9, thereby shutting off the water being discharged into the cistern.

When the water is discharged from the storage or flushing cistern, the water level falls and permits the lever arm 14, rod 15 and float 16 also to fall by their combined weight under gravity, thus re-aligning the passageways 8, 12 and 9 to replenish the volume in the cistern to the set level 17. The set level is determined by adjusting the height of the float 16 in the cistern by means of raising or lowering the lever arm 14 on the rod 15 and securing it thereon.

In the embodiment shown in Figure 1, the two valve members 5 and 6 are held in contact with one another by the geometry of the valve body 4. In the embodiment shown in Figure 3, however, the two valve members are held in contact with one another by means of a spring pressing between the inner end wall of the valve body 4 and the opposite face to the face 7 of the valve member 5 in order to resist the valve members being forced relatively apart by water pressure. Means other than a spring could be provided to achieve the same purpose. The rotatable valve member 5 is connected to the stem 13 and is shaped as a disc having two opposed cut-away portions 5A which, with the bore of the valve body 4 in which it is mounted, define the passageways to allow flow of water therepast. The fixed valve member 6 is in the form of a circular disc fitted in an encircling groove in the bore of the valve body 4 adjacent the valve member 5 and has two passageways 6A in it. The polished area 7 is arranged to have the same configuration as that of the valve member 5. With the valve members 5 and 6 in the orientation illustrated in Figure 3A and when they are placed face on to one another in that configuration, it will be seen that water can pass freely from the supply 2 through the passageways 6A and 5A. If, however, the valve member 5 is rotated through 90$^{\circ}$, the passageways will be closed. The float/lever arm arrangement can be as that shown in Figures 2A and 2B.

In the form shown in Figures 4 and 4A, the pressure of the water supply 2 is relied upon to keep the two valve members 5 and 6 together, the positions of the valve members 5 and 6 being transposed from the positions adopted in the Figure 3 version. In the Figure 4 version, the stem 13 passes through a central hole in the fixed valve member 6. In other respects, the valve member 6 is of similar configuration to the version shown in Figure 3A. However, as shown in Figure 4A, the valve member 5 can be substantially oblong, it only requiring the two end faces 7A thereof to close the passageways 6A in the valve member 6. Accordingly, it is the space surrounding the long sides of the valve member 5 and defined by the bore of the valve body 4 that provides the passageways of that valve member.

The valve members 5 and 6 so far described are in the form of discs which can rotate relatively to one another and the discs may be of any desirable shape. However, as shown in Figure 5, the valve members could have such a form that they are slidable in linear fashion relatively to one another. Thus, in this form, the straight lever arm 14 is replaced by a dog leg lever arm 14A which is pivotally mounted part way along its length at 19. The rotatable valve actuator stem 13 is replaced by a slidable stem 13A which is coupled by means of a pin 13B sliding in a slot 14B in the lever arm 14A. As the float 16 rises and lowers, the stem 13A is pushed to the left and pulled to the right, respectively, thereby respectively closing and opening the passageway 6A in the valve member 6.

In each case, the number of passageways is preferably two in each of the valve members because then one can employ a commerically available assembly of two valve members, with the passageways through one in the north and south positions and the passageways through the other in the east and west positions when the valve is closed.

It will be appreciated that the valves could be above the top of the cistern, in order to facilitate maintenance.

O-rings can be provided as appropriate to provide satisfactory sealing around the periphery of the fixed valve member 6.

The various fixed parts of the valve in each case could be ultrasonically welded together to eliminate costly threaded components.

Furthermore, the valve member 5 could be integral with the stem 13/13A.

The valve members described above are in the form of concentric discs generally mounted in a concentric assembly and with concentric operation. With two passageways, this necessitates a $90^{o}$ actuation on/off. However, it will be appreciated that an eccentric arrangement using a passageway only in the fixed valve member could be used. With this arrangement, the angle for on/off operation is thus reduced to around $45^{o}$ dependent upon the final exact shape and size/configuration of the aperture in the fixed valve member. Such an arrangement could be incorporated in any of the embodiments described above.

The valve members could be given inherent spring characteristics to cause them to maintain themselves in contact with one another or the valve members could be magnetised with the polarity arranged so that they attract each other to resist parting under pressure.

CLAIMS

1. A float-operated valve including two valve members (5, 6) having adjoining polished faces (7) that are slidable relatively to one another, each of the members defining a passageway (5A, 6A) opening into a respective said face, which passageways, upon relative sliding of the two members (5, 6), become aligned with one another thereby opening the valve to allow passage of liquid past the valve members, the valve being closed by relative sliding of the two members to bring the passageways out of alignment with one another, and the valve further including a float (16) operatively coupled to one of the two valve members (5) whereby a variation, in use, in the height position of the float as dictated by the level of the liquid in which the float is situated causes said one valve member to slide relatively to the other valve member as aforesaid to open or close the valve.

2. A valve as claimed in claim 1, wherein each valve member is made of a ceramic material.

3. A valve as claimed in claim 1 or 2, wherein said adjoining polished faces are optically flat and have a high resistance to scouring.

4. A valve as claimed in any one of the preceding claims, wherein said two valve members are in the form of discs, of which one is rotatable relatively to the other.

5. A valve as claimed in any one of the preceding claims, wherein said float (16) is operatively coupled to said one valve member (5) by means of a rotatable valve actuator (13), the two valve members being held in contact with one another by resilient means (18) pressing between an inner end wall of a valve body (4) in which the valve members are mounted and said one valve member (5), the other valve member (6) being fixed in position and upstream of said one valve member in said valve body (4).

6. A valve as claimed in any one of claims 1 to 4, wherein said float (16) is operatively coupled to said one valve member (5) by means of a rotatable valve actuator (13), being rotatable relatively to the other valve member and being positioned upstream of said other valve member, said valve actuator (13) including a stem which passes through a central hole in said other valve member.

7.    A valve as claimed in claim 1, 2 or 3, wherein said one valve member is slidable in linear fashion relatively to the other valve member, said float (16) being operatively coupled to said one valve member by means of a dog leg lever arm (14A) which is pivotally mounted part way along its length and is coupled to a valve actuator in the form of a slidable stem (13A) which is joined to said one valve member.

8.    A valve as claimed in any one of the preceding claims, wherein there are two passageways (6A) in said one valve member.

9.    A valve as claimed in any one of the preceding claims, wherein said adjoining polished faces are on raised bosses on one or other or both said valve members.

10.    A valve as claimed in any one of the preceding claims, wherein said valve members have inherent spring characteristics to cause them to maintain themselves in contact with one another.

FIG. 1.

FIG. 2A.

FIG. 2B.

FIG. 3.

FIG. 3A.

FIG.4.

FIG.4A.

FIG.5.

EUROPEAN SEARCH REPORT

0144117
Application number

EP 84 30 4944

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-2 843 665 (ROKAL ARMATUREN GMBH) <br> * Complete document * | 1-3,7,8 | F 16 K 31/30 <br> E 03 D 1/32 |
| X | US-A-1 641 240 (STOCKHOLDER) <br><br> * Page 1, line 53 - page 2, line 26; figures 1-5 * | 1,4-6,8 | |
| A | US-A-2 804 088 (KENNEDY) <br> * Column 1, line 61 - column 4, line 30; figures 1-7 * | 1,5,6 | |
| A | DE-U-1 840 250 (DEUTSCHE GERÄTEBAU GMBH & CO. KG.) <br> * Page 5, paragraph 3; figure * | 5 | |
| A | DE-C- 691 928 (KLEIN, SCHANZLIN & BECKER) <br><br> ----- | | TECHNICAL FIELDS SEARCHED (Int. Cl.4) <br><br> E 03 D 1/00 <br> F 16 K 31/00 |

The present search report has been drawn up for all claims

| Place of search | Date of completion of the search | Examiner |
|---|---|---|
| BERLIN | 19-11-1984 | PAETZEL H-J |